# EUROPEAN PATENT APPLICATION

(11) **EP 4 845 091 A1**
(43) Date of publication of application: **25.11.2026**
(21) Application number: 25000056.9
(22) Date of filing: 21.05.2025
(51) Int. Cl.: H04L 9/30, G06Q 10/00, H04L 9/32, H04L 9/00

(54) **METHOD AND SYSTEM FOR A UNIVERSAL AI PROCESSING KEY (UAPK)**

(71) Applicant: Sanker, Miriam, 50859 Köln (DE)
(72) Inventor: Miriam Sanker, 50859 Köln (DE); Sanker, David, 50859 Cologne (DE)

(57) **Abstract**

The present invention provides a computer-implemented method and system for generating and utilizing a Universal AI Processing Key (UAPK)-a single, structured control vector that encapsulates all configuration parameters of an AI-driven enterprise. Corporate and AI-OS components are serialized into a versioned JSON-LD manifest, hashed into a content-addressed Merkle tree root, and signed with a lattice-based, post-quantum digital signature. Connector definitions specify interfaces, protocols, endpoints, and credential references to "dock" with external vector stores, databases, LLM endpoints, and services. The manifest may be stored off-chain in CBOR/IPLD and minted as an on-chain NFT. A dedicated interpreter fetches, verifies, and parses the UAPK to orchestrate end-to-end workflows-ingestion, retrieval, delivery, planning, monitoring, and continual learning-under embedded policy and risk guardrails. This approach yields reproducible, portable, tamper-evident, and auditable AI-run enterprises as tradable digital assets.

## Description

### Field of the Invention

The present invention lies at the intersection of enterprise digital-twin modelling, agent-based Al orchestration, and content-addressed data packaging. It introduces a Universal Al Processing Key (UAPK) realized as a signed JSON-LD knowledge graph-serializable to CBORIIPLD and packaged into a CAR archive with a root CID or stored on hardware/software tokens-that encapsulates corporate governance workflows and the full Al-Operating-System stack, from data ingestion and retrieval-augmented generation through delivery, monitoring, and continual learning, under cryptographically enforced policy guardrails.

### Background of the Invention

Contemporary Al-orchestration platforms (e.g. LangChain, Haystack, OpenAl Agents) let developers assemble complex, multi-step workflows by linking tool chains, RAG pipelines, and autonomous agent loops. In practice, these frameworks scatter configuration across disparate YAML, JSON or proprietary files; integrate each service via its own API; and store secrets in isolated vaults. The result is brittle end-to-end delivery that is hard to reproduce, maintain, or secure.

Separately, "digital twin" solutions model production lines, network topologies or business processes as virtual replicas, capturing operational parameters and simulation logic. However, these twins seldom interoperate in a versioned, machine-readable fashion with Al stacks. They lack a canonical linked-data representation and content-addressed packaging, and provide no automated mechanism for docking with external resources or enforcing runtime governance.

No prior art teaches (a) a single, tamper-evident, content-addressed manifest-packaged as a CAR archive derived from a JSON-LD graph and signed with post-quantum cryptography-capable of unifying corporate-process definitions, Al-OS configurations, standardized connector schemas, and policy-enforcement rules; (b) a method to serialize that manifest to CBOR/IPLD for efficient storage and transport; or (c) a mechanism to mint, transfer, and instantiate such a manifest from on-chain pointers or hardware/software tokens, thereby transferring full operational control of an Al-driven enterprise as a tokenizable digital asset.

The present invention overcomes these deficiencies by providing a Universal Al Processing Key (UAPK) that is at once a digital twin, an Al-OS blueprint, and a tradable content-addressed asset-securely packaged, versioned, extensible, and enforceable under human-defined guardrails.

### Summary of the Invention

This invention addresses the fragmentation of Al orchestration and digital-twin silos by defining a computer-implemented method and system that generates, stores, and utilizes the Universal Al Processing Key (UAPK) as a signed, content-addressed JSON-LD knowledge graph, serializable to CBOR/IPLD and packaged in a Content Addressed Archive (CAR).

### Brief Description of the Drawings

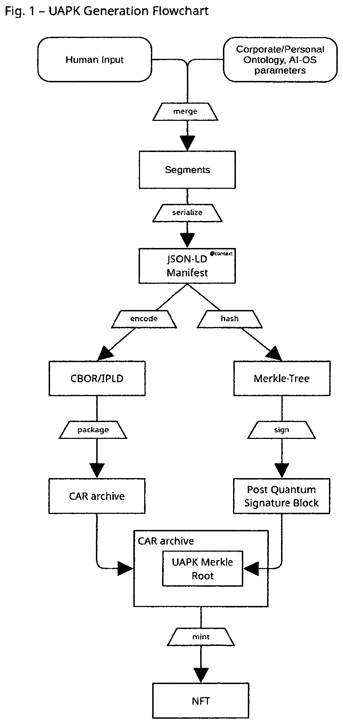

Fig. 1 - UAPK Generation Flowchart. Illustrates the end-to-end process of creating the Universal Al Processing Key: mapping semantic and functional inputs into named segments (10 → UAPK Generator Module), hashing them and constructing a Merkle tree (20 → Merkle-Tree Commitment Layer), applying a post-quantum signature (30 → Post-Quantum Signature Block), and minting the NFT on-chain (80 → On-Chain Anchor / NFT Metadata).

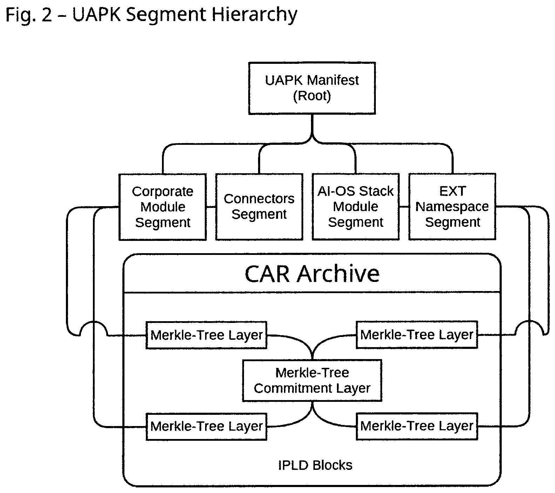

Fig. 2 - UAPK Segment Hierarchy. A block diagram showing the manifest's partition into top-level segments-corporate modules (40 → Corporate Module Segment Group), Al-OS modules (50 → Al-OS Stack Module Segment Group), connector definitions (60 → Connectors Segment), and reserved ext placeholders (70 → EXT Namespace Segment)-each anchored as a Merkle leaf (20 → Merkle-Tree Commitment Layer).

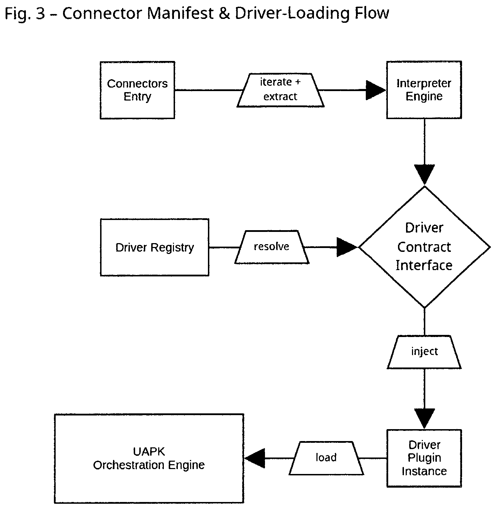

Fig. 3 - Connector Manifest & Driver-Loading Flow. Details how the interpreter parses each connector entry in the connectors segment (60 → Connectors Segment), matches its declared interface identifier, and dynamically instantiates the corresponding driver plugin within the interpreter engine (90 → UAPK Interpreter & Orchestration Engine).

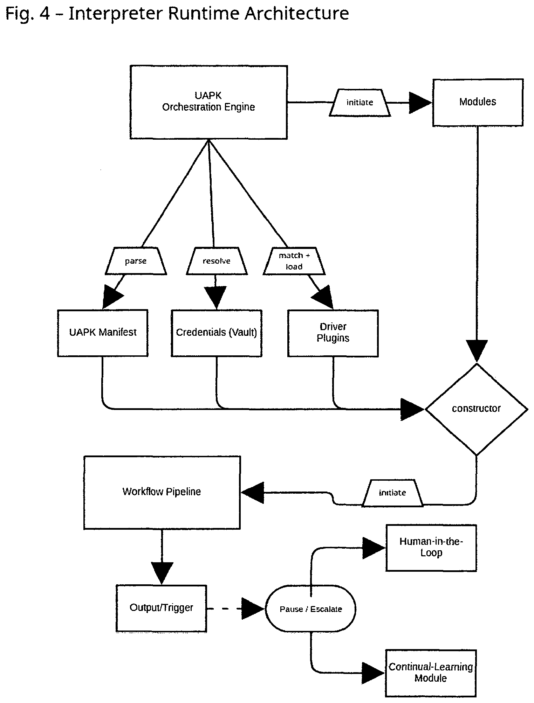

Fig. 4 - Interpreter Runtime Architecture. Depicts the interpreter's runtime workflow: fetching and verifying the UAPK, resolving vault-referenced credentials, loading connector drivers, instantiating corporate and Al-OS modules, orchestrating end-to-end pipelines (100 → Workflow Pipeline), enforcing policy and human-escalation rules (110 → Policy Enforcement & Human-Escalation Component), and feeding operational data into the continual-learning module (120 → Continual-Learning Module).

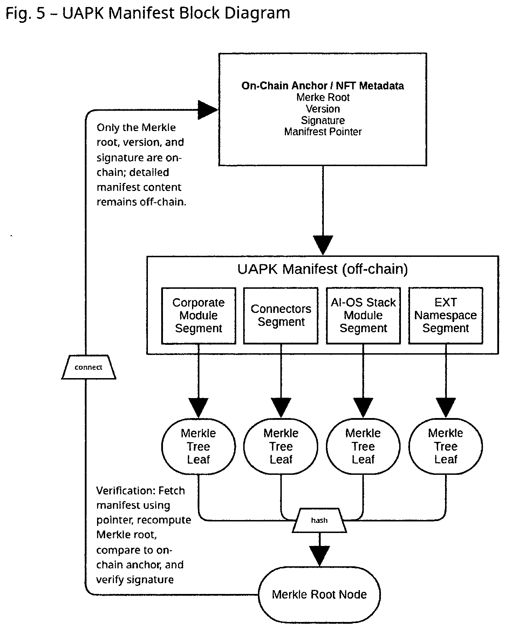

Fig. 5 - UAPK Manifest Block Diagram. A schematic overview of the manifest structure: the on-chain anchor metadata (80 → On-Chain Anchor / NFT Metadata) and the four named namespaces-corporateModules (40), aiOsModules (50), connectors (60), and ext (70)-each represented as a Merkle-tree leaf.

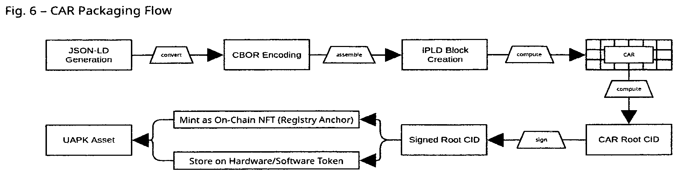

Fig. 6 - CAR Packaging Flow. A flowchart showing how each JSON-LD segment is serialized to CBOR/IPLD, how those blocks are assembled into a Content Addressed Archive (CAR), and how the CAR root CID is then signed and optionally minted as an on-chain NFT or stored on a hardware token.

### Detailed Description of the Invention

In one embodiment, a human user or a specialized language model completes a guided form to capture corporate-domain ontologies-such as organization charts, policy frameworks, risk models, and tokenization rules-together with Al-OS parameters including model registry entries, prompt templates, ingestion and vectorization settings, reasoning-chain definitions, agent profiles, and observability metrics, as well as connector definitions specifying interface identifiers, transport protocols, endpoints, authentication schemes, and secure vault URIs.

Each JSON-LD segment is canonicalized and hashed using a quantum-resistant function (for example, SHA-3 or later), then serialized into CBOR/IPLD blocks that are collectively packaged into a CAR archive whose root content identifier (CID) serves as the manifest's immutable reference.

A post-quantum Merkle tree is constructed over the segment CIDs, and the concatenation of its root digest with a version counter is signed using a lattice-based post-quantum algorithm (such as CRYSTALS-Dilithium, Falcon, or SPHINCS+).

The resulting signature, version field, and optional revocation roots are embedded in the CAR metadata. Optionally, the CAR root CID, version, and signature are minted as an on-chain non-fungible token or stored on a secure hardware token.

At runtime, a UAPK interpreter retrieves the CAR archive from decentralized storage or the hardware token, verifies the post-quantum signature and Merkle root, resolves JSON-LD IRIs to retrieve the CBOR/IPLD blocks, dynamically loads connector plugins based on interface identifiers, instantiates both corporate and Al-OS modules within an orchestration engine, and executes ingestion, retrieval, delivery, planning, monitoring, and continual-learning workflows under embedded governance, risk, and ethics guardrails, thereby realizing a fully autonomous, versioned, and extensible Al-driven enterprise.

By unifying all corporate process definitions and Al-OS configurations into a single, tamper-evident manifest, the UAPK guarantees reproducibility-identical input parameters always yield the same manifest-and enables seamless portability across on-premises, cloud, and edge environments.

The use of quantum-resistant hash functions and lattice-based signatures secures the manifest against both classical and quantum-era attacks, while referencing credentials stored in secure vaults prevents secret leakage. Serializing to CBORIIPLD and packaging in a CAR archive delivers compact storage, efficient block retrieval, and native interoperability with decentralized storage networks. The inclusion of a reserved extensibility namespace within the JSON-LD manifest future-proofs the system, allowing new connector types or modules to plug in without altering the core schema and preserving backward compatibility.

When the CAR root CID, version, and signature are minted as an NFT or provisioned on a hardware token, the UAPK becomes a tradable digital asset-analogous to equity or e-shares-enabling fractional ownership, secondary-market trading, and novel capital-market mechanisms for Al-operated enterprises or personalized Al avatars. Finally, embedding comprehensive policy, compliance, and ethical constraints within the manifest and enforcing them automatically at startup and during execution ensures that the autonomous enterprise remains under strict human-defined guardrails, pausing or escalating to a human-in-the-loop in response to any predefined threshold breach. Together, these effects deliver a truly universal, secure, auditable, and monetizable control key for next-generation Al-driven organizations.

A complete JSON-LD exemplar of the UAPK manifest is provided in Annex A: Listing 1. This listing illustrates all top-level segments-corporateModules, aiOsModules, connectors, ext-as well as the cryptographic header (merkleRoot, version, signature) and off-chain pointer. Annex A - Listing 1 (Example UAPK Manifest)

### Industrial Applicability and Examples

The Universal Al Processing Key (UAPK) is broadly applicable across industries seeking to deploy, govern, and even trade fully autonomous Al-driven operations with rigorous security, auditability, and minimal bespoke integration effort. By encapsulating both high-level corporate workflows and low-level Al-OS configurations into a single, tamper-evident manifest-stored as a signed, content-addressed JSON-LD/CAR archive and optionally minted as an NFT or hardware token-the UAPK enables turnkey, policy-compliant Al systems on-premises, in the cloud, or at the edge.

In manufacturing and Industry 4.0 scenarios, operators load a UAPK manifest into a digital-twin runtime to instantiate a virtual replica of assembly lines. Live sensor streams-from vibration monitors to thermal cameras-are automatically ingested, causal-reasoning overlays detect emerging bottlenecks, defect-detection agents coordinate with robotic controllers, and supply-chain optimizers adjust orders in real time. The very same manifest can first be deployed in a simulation environment, then seamlessly promoted to shop-floor control systems, ensuring consistency, traceability, and rapid iteration under embedded safety and quality policies.

Highly regulated sectors such as finance, healthcare, and energy benefit from the UAPK's built-in compliance and audit capabilities. Banks configure anti-money-laundering agents, dynamic transaction-screening thresholds, and role-based access controls under GDPR, SOX, and Basel III rules, with every policy change cryptographically signed and time-stamped. Hospitals lock down patient-data ingestion pipelines, consent-management workflows, and clinical-decision-support agents under HIPAA and IRB mandates, automatically pausing any workflow that violates privacy constraints. Utility operators deploy UAPK-driven grid twins to monitor network health, automate incident response, and enforce NERC CIP cybersecurity rules, with each firmware or policy update following the same signed, versioned deployment process.

System integrators and Al-as-a-service providers can package complete UAPK manifests-delivered on secure hardware tokens or via NFT-based licenses-as an "Al-Operating-System in a Box." A regional retailer or small manufacturer simply plugs in a USB dongle, answers a brief guided setup questionnaire, and immediately launches preconfigured Al pipelines for CRM, inventory forecasting, or quality assurance, all without in-house Al expertise. Franchise networks distribute branded UAPK tokens to each outlet, ensuring uniform execution of marketing agents, sales-territory models, and support avatars, while permitting localized connector adaptations or minor policy tweaks under corporate guardrails.

In mergers, acquisitions, and asset trading, the UAPK enables digital assetization of entire business units. A buyer acquires an Al-managed division by transferring a single on-chain NFT representing the signed UAPK manifest-instantly granting all workflows, data connectors, and governance rules. Venture capital and private equity firms perform technical due diligence by inspecting off-chain manifests for version history, policy changes, and provenance before investing. Beyond traditional equity, UAPK tokens may be fractionally owned, traded on secondary markets, and governed by smart contracts automating dividend distributions, usage rights, and compliance checks-opening novel capital-market mechanisms for enterprise-scale Al assets.

Edge and loT deployments-such as smart buildings, autonomous vehicles, and remote monitoring-leverage the UAPK's compact cryptographic commitments and connector definitions to orchestrate local agents on constrained devices. Gateways periodically fetch updated CAR archives over secure channels, apply firmware-level policy checks, and continue operation with local data caching and incremental learning even during cloud disconnections.

In continuous integration and DevOps pipelines, every commit to Al model code, data schemas, or policy configurations triggers automated UAPK regeneration, post-quantum signing, and redeployment. CI/CD tools rebuild the Merkle tree, re-mint or update the NFT, and push to test, staging, and production clusters. Rollbacks become trivial-interpreters compare version counters, consult revocation roots, and revert to known-good manifests-while audit logs record who changed what, when, and under which approval, greatly enhancing traceability and compliance.

Through these diverse applications, the UAPK transforms how organizations of any size or industry design, deploy, govern, and trade Al-driven enterprises-making advanced automation accessible, auditable, and portable at scale.

In one illustrative embodiment, a legal-assistant avatar is driven entirely by a Universal Al Processing Key (UAPK) manifest. When the interpreter initializes, it first parses the manifest's connectors segment to establish secure links to a vector store of legal precedents and to a document-management system. Next, a DocumentParserAgent is instantiated and configured with parsing templates and OCR parameters drawn from the Al-OS segment; concurrently, a CaseRetrievalAgent is created and loaded with retrieval strategies and re-ranking models. Thereafter, a SummaryGeneratorAgent is spun up, equipped with prompt templates and reasoning-chain definitions, to draft concise legal briefs. At each stage, embedded policy rules-such as client-confidentiality constraints and jurisdictional limits-are enforced in real time, and any attempted breach (for example, a request for prohibited documents) causes the interpreter to pause execution and escalate to a human-in-the-loop interface. As new case documents are ingested, operational feedback is routed into the continual-learning module, which fine-tunes the summarization model under version control, all in accordance with the same immutable UAPK "DNA."

### Citation List

### Patent Literature

PTL1: EP 3 933 516 A1, "Enterprise Generative Artificial Intelligence Architecture," published Oct. 2021.
PTL2: EP 4 052 723 A1, "Modular Al Agent Orchestration," published Feb. 2022.
PTL3: US 11,494,171 B1, "Configurable Agent-Based Workflow Control," issued Nov. 2022.
PTL4: WO 2021/084510 A1, "Deployment of Al-Driven Digital Twins," published May 2021.
PTL5: EP 3 826 029 A1, "Predictive Workflow Analytics Engine," published May 2021.

### Non-Patent Literature

NPL1: NIST, "Post-Quantum Cryptography: NIST's Plan for the Future," NIST Special Publication 800-208, Mar. 2022.
NPL2: Jones et al., "Secure Merkle Trees for Tamper-Evident Data Structures," IEEE Trans. on Information Forensics and Security, vol. 15, no. 4, pp. 1023-1038, Apr. 2020.
NPL3: Smith & Lee, "Connector Contract Abstractions in Microservice Architectures," ACM Computing Surveys, vol. 53, no. 2, Article 34, Mar. 2021.

## Claims

1. A computer-implemented method for automated initialization and execution of an Al-operated enterprise, the method comprising:
(a) receiving, via an on-chain pointer, an off-chain Universal Al Processing Key (UAPK) manifest;
(b) computing, by a processor, a Merkle-tree root over named segments of the UAPK manifest and comparing the computed root to a Merkle-tree root stored on-chain;
(c) verifying, by the processor, a lattice-based digital signature over the on-chain Merkle-tree root concatenated with a version counter included in the UAPK manifest;
(d) parsing the UAPK manifest into discrete segments, the segments including corporate module segments, Al-OS stack segments, connector definitions, and an EXT segment;
(e) resolving credential references in each connector definition by querying a secure vault or key-management service;
(f) loading driver plugins for each connector by looking up an interface identifier specified in the connector definitions;
(g) instantiating, within an orchestration engine, modules configured by the segment parameters to perform data ingestion, vector retrieval, delivery, task planning, runtime monitoring, and continual learning; and
(h) executing enterprise-scale workflows under policy and risk constraints defined in the corporate module segments, including automatically pausing execution and escalating to a human-in-the-loop upon detection of any guardrail violation.

2. The method of Claim 1, further comprising minting, on a blockchain, a non-fungible token that stores only the Merkle-tree root, version counter, digital signature, and a content-addressed pointer to the off-chain UAPK manifest.

3. The method of Claim 1 or 2, wherein one or more named segments correspond to large configuration blobs, and the UAPK manifest replaces raw-data leaves with constant-size KZG polynomial commitments, the method further comprising verifying inclusion of a requested sub-segment via an O(1) inclusion proof.

4. The method of any preceding claim, wherein the corporate module segments include at least governance, strategy, product operations, marketing, customer support, finance, legal, human resources, business intelligence, security, supply chain, information technology, collaboration, brand identity, and tokenization.

5. The method of any preceding claim, wherein the Al-OS stack segments include at least foundation model registry, model settings, ingestion/enrichment/chunking/vectorization parameters, embedding model definitions, retrieval and reranking strategies, reasoning-chain definitions, agent orchestration profiles, continual-learning module, and observability metrics.

6. The method of any preceding claim, wherein each connector definition specifies, for an external resource, an interface identifier, protocol type, network endpoint, authentication scheme, and a credential reference to a vault or key-management service.

7. The method of any preceding claim, wherein the UAPK manifest includes a reserved EXT segment for registering one or more namespaces corresponding to future connector types or modules without requiring modification of the core manifest schema.

8. A system for automated initialization and execution of an Al-operated enterprise, comprising:
(a) a UAPK generator module configured to accept corporate ontology inputs, Al-OS parameters, and connector definitions, and to output a post-quantum Merkle-anchored, lattice-signed UAPK manifest;
(b) a UAPK interpreter module configured to fetch the manifest via an on-chain pointer, recompute and verify the Merkle-tree root and signature, parse the manifest segments, and resolve credential references;
(c) a driver-loading module configured to instantiate connector plugins based solely on interface identifiers specified in the manifest; and
(d) an orchestration engine configured to instantiate and configure the modules defined by the corporate and Al-OS segments and to execute end-to-end enterprise workflows under embedded policy guardrails.

9. The system of Claim 8, further comprising an on-chain registry that stores UAPK NFTs and associated metadata records including pointers to the off-chain UAPK manifest.

10. A non-transitory computer-readable medium storing instructions which, when executed by a processor, cause the processor to perform the method of any of Claims 1-7.

11. The method of any preceding claim, wherein the lattice-based digital signature is performed using a post-quantum cryptographic algorithm selected from the group consisting of CRYSTALS-Dilithium, Falcon, and SPHINCS+.

12. The method of any preceding claim, wherein the embedded policy and risk constraints comprise corporate risk thresholds, ethics rules, compliance regulations, and human-escalation triggers.

13. The method of any preceding claim, wherein the orchestration engine dynamically spawns one or more sub-agents based on task-routing logic defined in the UAPK manifest.

14. The method of any preceding claim, wherein the connector definitions support protocol types including REST, gRPC, SSH, and WebSocket.

15. The method of any preceding claim, wherein the off-chain UAPK manifest is stored in a decentralized, content-addressed network selected from IPFS and Arweave, and wherein the content-addressed pointers are pinned to ensure high availability.
